# EUROPÄISCHE PATENTSCHRIFT

(11) **EP 2 166 243 B1**
(45) Veröffentlichungstag und Bekanntmachung des Hinweises auf die Patenterteilung: **20.11.2013**
(21) Anmeldenummer: 09010784.8
(22) Anmeldetag: 24.08.2009
(51) Int. Cl.: F16D 3/77

(54) **Kupplungsmembran und Kupplung mit einer solchen**
Coupling membrane and coupling comprising such membrane
Membrane d'accouplement et accouplage avec cette membrane

(30) Priorität: 22.09.2008 DE 102008050665
(43) Veröffentlichungstag der Anmeldung: 24.03.2010
(73) Patentinhaber: GKN Stromag AG, 59425 Unna (DE)
(72) Erfinder: Kamps, Thomas, Dr., 59439 Holzwickede (DE); Dorok, Günter, 59174 Kamen (DE)
(74) Vertreter: Patentanwälte Ruff, Wilhelm, Beier, Dauster & Partner

(56) Entgegenhaltungen:
- EP-A1- 0 803 661
- DE-C- 717 231

## Beschreibung

### Anwendungsgebiet und Stand der Technik

Die Erfindung betrifft eine Kupplung und eine metallische Kupplungsmembran hierfür nach den Oberbegriffen der Ansprüche 1 und 8.

Kupplungsmembranen sind aus dem Stand der Technik hinlänglich bekannt. Aus der DE 15 75 969 ist beispielsweise eine solche Kupplungsmembran bekannt. Bei dieser sind nierenförmige Aussparungen vorgesehen, um die Elastizität der Kupplungsscheibe an konkrete Bedürfnisse anzupassen. Auch die DE 36 01 080 C1 zeigt Kupplungskörper, die zur Anpassung der Drehelastizität Ausnehmungen aufweisen.

Aus der EP 0803661 A1 ist eine im Wesentlichen runde Kupplungsmembran bekannt, die eine unebene Gestalt aufweist und über eine Vielzahl von Durchbrechungen verfügt, von denen vier in Radialrichtung eine größere Erstreckung als in Tangentialrichtung aufweisen.

### Aufgabe und Lösung

Aufgabe der Erfindung ist es, eine gattungsgemäße Kupplungsmembran sowie eine Kupplung mit einer solchen Membran zu verbessern und hierbei insbesondere eine optimale Ausgestaltung zu finden, die die zum Teil gegenläufigen Anforderungen hinsichtlich großer Nachgiebigkeit, hinreichende Belüftungsmöglichkeit, guter Materialausnutzung und hoher Stabilität erfüllt.

Erfindungsgemäß ist hierfür eine gattungsgemäße Kupplungsmembran gemäß Anspruch 1 ausgestaltet.

Eine solche Gestaltung mit mindestens sechs radial erstreckten Langlöchern hat sich bei Versuchen als besonders vorteilhaft herausgestellt. Die Langlöcher sind in einem Zwischenbereich angeordnet, wobei dieser Zwischenbereich außenseitig an den äußeren Anschlussbereich und innenseitig an den inneren Anschlussbereich heranreicht. Die Grenze des Zwischenbereichs liegt üblicherweise dort, wo im montierten Zustand die Anschlussbauteile an der Membran anliegen und/oder den freien Luftstrom in diesen Bereichen verhindern.

Als Langlöcher im Zusammenhang mit dieser Erfindung werden solche Durchbrechungen verstanden, deren radiale Erstreckung größer ist als die maximale Erstreckung in Tangentialrichtung. Vorzugsweise weisen die Langlöcher eine in etwa oder exakt elliptische Form auf oder sind anderweitig so geformt, dass keinerlei scharfkantige Ecken vorhanden sind.

Die Kupplungsmembran, in der die Langlöcher vorgesehen sind, weist eine rotationssymmetrische Grundform auf, welche im unbelasteten Zustand plan ist.

Wie bereits erläutert, sind mindestens sechs Langlöcher vorgesehen, insbesondere vorzugsweise acht Langlöcher. Diese Mehrzahl von Langlöchern ist vorzugsweise gleichmäßig auf den Umfang verteilt.

Die einzelnen Langlöcher weisen vorzugsweise ein Verhältnis zwischen ihrer radialen Erstreckung und ihrer Erstreckung in Tangentialrichtung zwischen 1,05 und 2 auf. Bevorzugt wird ein Verhältnis zwischen 1,05 und 1,5, insbesondere zwischen 1,1 und 1,2. Diese Verhältnisse haben sich als vorteilhaft herausgestellt, da durch sie die verschiedenen Anforderungen an eine erfindungsgemäße Kupplungsmembran besonders vorteilhaft gleichzeitig zu realisieren sind.

Die Summe der durch die Langlöcher gebildeten Freiflächen beträgt zwischen 25 und 50% der Fläche des Zwischenbereichs. Besonders von Vorteil ist es, wenn die Summe der Freiflächen zwischen 28% und 40% des Zwischenbereichs einnimmt. Eine solche Gestaltung, bei der also in etwa ein Drittel der Fläche des Zwischenbereichs aufgrund der Durchbrechungen frei bleibt und einen Luftstrom durch die Kupplungsmembran gestattet, stellt einen guten Kompromiss zwischen der benötigten Festigkeit und einer ausreichenden durch die Kupplungsmembran hindurch förderbaren Luftmenge sowie einer ausreichenden Nachgiebigkeit dar.

Der Mittelpunkt des Langlochs bzw. der Langlöcher ist vorzugsweise außenseitig eines Mitteldurchmessers des Zwischenbereichs angeordnet, wobei der Mitteldurchmesser in der Mitte zwischen dem Außendurchmesser des Zwischenbereichs und dem Innendurchmesser des Zwischenbereichs angeordnet ist. Bei einer solchen Gestaltung sind die Langlöcher demzufolge radial eher außen angeordnet, so dass der besonders belastete Innenbereich der Kupplungsmembran von schwächenden Langlöchern weitgehend freigehalten wird. Als Mittelpunkt des Langlochs wird im Zusammenhang mit dieser Erfindung der Punkt angesehen, der in Radialrichtung und in Tangentialrichtung bzw. Umfangsrichtung jeweils mittig zwischen den äußersten Rändern des Langlochs angeordnet ist.

Besonders von Vorteil ist es, wenn der Mittelpunkt des Langlochs in einem Abstandsintervall zwischen 50% und 60%, insbesondere in einem Abstandsintervall zwischen 52% und 58%, des radialen Abstandes zwischen dem Innendurchmesser und dem Außendurchmesser des Zwischenbereichs angeordnet ist. Das Langloch ist demnach vorzugsweise nur leicht jenseits des Mitteldurchmessers zwischen Außendurchmesser und Innendurchmesser des Zwischenbereichs angeordnet.

Erfindungsgemäß ist vorgesehen, dass die radiale Erstreckung des Langlochs zwischen 80% und 95%, vorzugsweise zwischen 83% und 90%, des radialen Abstandes zwischen dem Innendurchmesser des Zwischenbereichs und dem Außendurchmesser des Zwischenbereichs beträgt. Zwar wird der Zwischenbereich bei einer solchen Gestaltung in radialer Hinsicht nicht vollständig von dem Langloch überspannt, im Hinblick auf die Stabilität ist es allerdings von Vorteil, wenn das Langloch zumindest nicht bis zum Innendurchmesser des Zwischenbereichs reicht.

Die Erfindung betrifft weiterhin eine Kupplung mit einem ersten und einem zweiten Anschlussbauteil und einer Kupplungsmembran, deren innerer Anschlussbereich mit dem ersten Anschlussbauteil drehfest ver-bunden ist und der im äußeren Anschlussbereich mit dem zweiten Anschlussbauteil drehfest verbunden ist. Diese Kupplung ist erfindungsgemäß mit der oben beschriebenen erfindungsgemäßen Kupplungsmembran ausgestattet.

Besonders von Vorteil ist es dabei, wenn eines der Anschlussbauteile, vorzugsweise das zweite Anschlussbauteil, einen ringförmigen Abschnitt aus einem Elastomer aufweist oder an einem solchen ringförmigen Abschnitt befestigt ist. Eine solche Kupplung, die einen Elastomerabschnitt aufweist, um radialen Versatz ausgleichen zu können und/oder eine Torsionsdämpfung zu bieten, bedarf in besonders hohem Maß einer guten Belüftung, da ansonsten zu hohe Temperaturen im Elastomer entstehen. Gerade für diesen Typ Kupplung ist die Verwendung einer erfindungsgemäß Kupplungsmembran daher von Vorteil.

### Kurzbeschreibung der Zeichnungen

Weitere Aspekte und Vorteile der Erfindung werden anhand eines Ausführungsbeispiels beschrieben, welches in den Figuren dargestellt ist. Dabei zeigen:
- Fig. 1: eine erfindungsgemäß Kupplung mit einer erfindungsgemäßen Kupplungsmembran in einer perspektivischen, geschnittenen Darstellung,
- Fig. 2: eine geschnittene Seitenansicht der Kupplung der Fig. 1 und
- Fig. 3: eine erfindungsgemäße Kupplungsmembran.

### Detaillierte Beschreibung der Ausführungsbeispiele

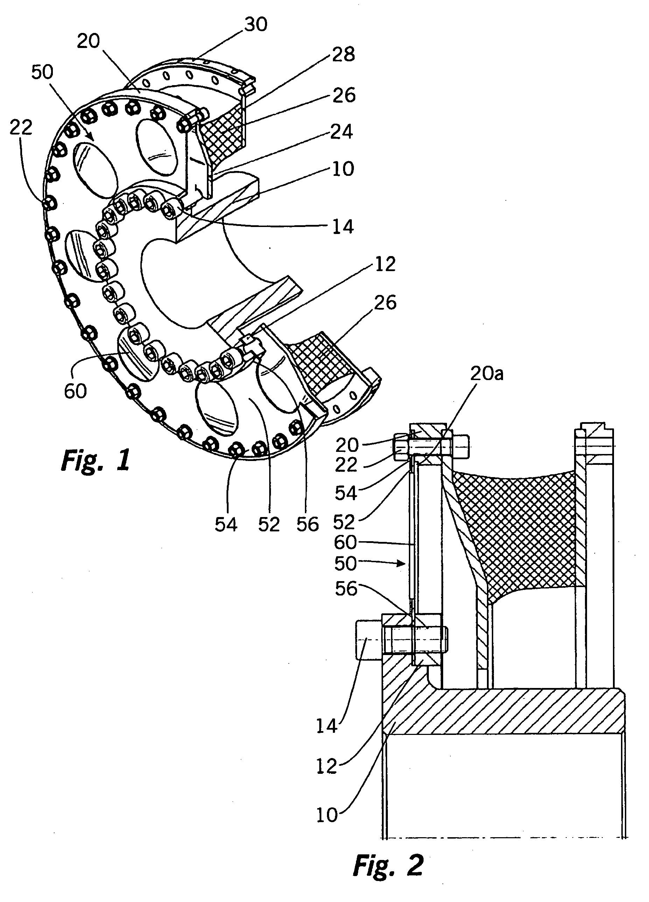

Fig. 1 zeigt eine erfindungsgemäße Kupplung. Diese verfügt über eine Kupplungsmembran 50 aus Federstahl, an der innenseitig mittels eines Druckrings 12 und Schrauben 14 eine Nabe 10 drehfest befestigt ist. Am äußeren Rand der Kupplungsmembran 50 ist ein Zentrierring 20 mittels einer Vielzahl von Schrauben 22 drehfest befestigt, wobei sich an diesen ersten Zentrierring 20 ein Flanschblech 24 anschließt, mittels dessen ein Elastomerring 26 und mittels eines damit verbundenen weiteren Flanschblechs 28 ein zweiter Zentrierring 30 befestigt sind.

Das Gesamtsystem ist zur Übertragung von Drehmomenten von dem zweiten Zentrierring 30 auf die Nabe 10 vorgesehen. Mittels des Elastomerrings 26 sowie der Kupplungsmembran 50 können dabei verschiedene Ungenauigkeiten ausgeglichen werden. So dient der Elastomerring insbesondere dem Ausgleich von radialem Versatz und einer Torsionsdämpfung. Mittels der Kupplungsmembran 50 ist insbesondere ein Versatzausgleich in axialer Richtung und ein Winkelversatzausgleich erzielbar.

Da insbesondere der Elastomerring 26 im Betrieb durch Verformung erhitzt wird, bedarf es einer Kühlung des Elastomerrings 26. Zu diesem Zweck sind in der Kupplungsmembran 50 insgesamt acht Durchbrechungen 60 vorgesehen. Diese Durchbrechungen haben die Form eines Ovals, dessen größte Erstreckung in radiale Richtung ausgeordnet ist.

Diese Durchbrechungen 60 sind in einem Zwischenbereich 52 der Kupplungsmembran 50 vorgesehen, wobei dieser Zwischenbereich 52 durch einen außenseitigen Anschlussbereich 54 und einen innenseitigen Anschlussbereich 56 begrenzt wird.

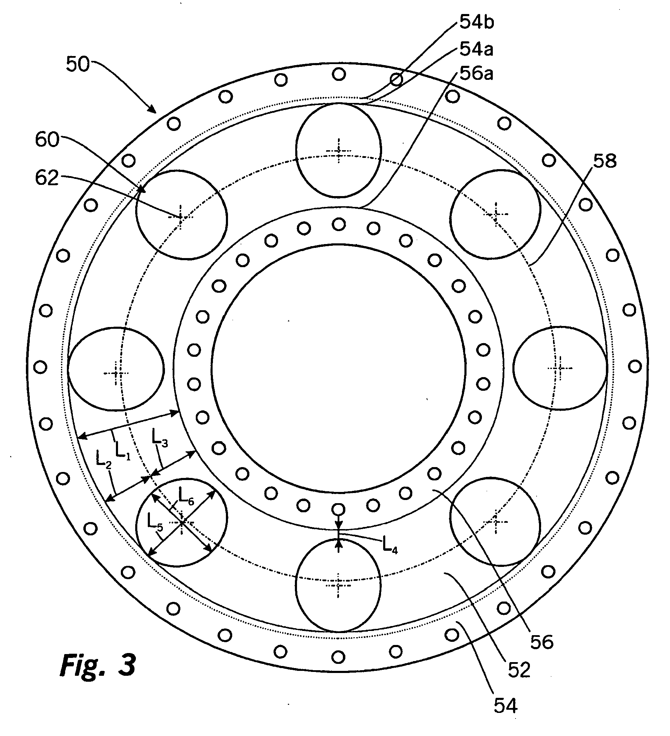

Fig. 2 zeigt die Kupplung der Fig. 1 in einer geschnittenen Seitenansicht. Dabei ist ersichtlich, dass der umlaufende Zentrierring 20 an seiner Innenseite eine Stufe 20a aufweist, so dass er nur über einen Teil seiner radialen Erstreckung an der Kupplungsmembran 50 unmittelbar anliegt. Die Bedeutung dieser Stufe für das Verständnis des Erfindungsgegenstandes wird nachfolgend noch anhand der Fig. 3 erläutert.

Die Fig. 3 zeigt in einer Draufsicht eine Kupplungsmembran 50 für eine Kupplung vom Typ der in den Fig. 1 und 2 dargestellten Kupplung oder für andere Kupplungen.

Zu erkennen sind der innere und der äußere Anschlussbereich 56, 54, wobei die gepunkteten Linien 56a, 54a die Grenzlinie zwischen den Anschlussbereichen 54, 56 und dem dazwischenliegenden Zwischenbereich 52 markieren. Bezugnehmend auf die Fig. 2 ist dabei folgende Besonderheit festzustellen. Während die außerhalb der Grenzlinie 54a liegende Linie 54b jenen Teil des äußeren Anschlussbereichs begrenzt, an dem der Zentrierring 20 unmittelbar anliegt, bildet dennoch erst die etwas nach innen versetzte Linie 54a die Grenze zwischen dem äußeren Anschlussbereich 56 und dem Zwischenbereich 52 im Sinne der Erfindung. Dies liegt daran, dass in dem Bereich zwischen den Linien 56a und 56b die zu Fig. 2 beschriebene Stufe 20a vorgesehen ist, so dass der Zentrierring 20 als Anschlussbauteil in diesem Bereich nur wenige Millimeter, insbesondere weniger als 5mm, von der Kupplungsmembran 50 entfernt ist. Es kann daher in diesem Bereich nicht zu einer freien Luftströmung kommen, so dass dieser Bereich zwischen den Linien 56a und 56b dem Zwischenbereich nicht zugeordnet wird.

In dem Zwischenbereich 52 sind die bereits zu Fig. 1 beschriebenen acht elliptischen Durchbrechungen 60 vorgesehen. Die Breite des Zwischenbereichs beträgt bei dem vorliegenden Ausführungsbeispiel L₁ gleich 110mm. Um L₂ = L₃ = 55mm ist eine umlaufende strichpunktiert dargestellte Mittellinie 58 des Zwischenbereichs 52 von den Randlinien 54a, 56a des Zwischenbereichs 52 beabstandet. Die Mittelpunkte 62 der Durchbrechungen 60 sind außenseitig dieser Mittellinie 58 angeordnet und erstrecken sich an ihrer Außenseite bis zum Rand des Zwischenbereichs 52. An ihrer Innenseite sind sie jedoch von der Linie 54a um L₄ = 10mm entfernt, so dass eine Schwächung der Kupplungsmembran 50 in diesem Bereich vermieden wird.

Die einzelnen Durchbrechungen 60 weisen in radialer Richtung eine Erstreckung von L₅ = 100mm auf und quer dazu in tangentialer Richtung eine Erstreckung von L₆ = 90mm.

In der Summe beträgt die Gesamtfläche des Zwischenbereichs etwa 158.200 mm², wobei etwa 37% der Fläche des Zwischenbereichs, in etwa 58.100 mm², von den acht Durchbrechungen 60 eingenommen wird.

Insbesondere durch die Kombination der großen in radialer Richtung länglichen Ausnehmungen mit deren Anordnung jenseits der Mittellinie 58 und der von den Ausnehmungen eingenommenen Fläche von etwas unter 40% des Zwischenbereichs führt zu einer besonders vorteilhaften Kupplungsmembran, die bei hoher Festigkeit gleichzeitig ein hohes Maß an Nachgiebigkeit bietet, vergleichsweise leicht und Material sparend ausgebildet ist, und eine gute Belüftung durch die Kupplungsmembran hindurch gewährleistet.

## Patentansprüche

1. Metallische Kupplungsmembran (50) mit einer scheibenförmigen und im unbelasteten Zustand planen Grundform mit
- einem ringförmigen inneren Anschlussbereich (56) zur drehfesten Befestigung an einem ersten Anschlussbauteil (10) und
- einem ringförmigen äußeren Anschlussbereich (54) zur drehfesten Befestigung an einem zweiten Anschlussbauteil (20, 25, 26, 28, 30),
**dadurch gekennzeichnet, dass**
in einem ringförmigen Zwischenbereich (52) zwischen dem inneren und dem äußeren Anschlussbereich (56, 54) mindestens sechs Durchbrechungen (60) in Form radial erstreckter Langlöcher (60) vorgesehen sind, wobei
- die Durchbrechungen (60) vollständig im Zwischenbereich (52) angeordnet sind,
- die Summe der durch die Langlöcher (60) gebildeten Freiflächen zwischen 25% und 50% der Fläche des Zwischenbereichs (52) beträgt und
- die radiale Erstreckung (L₅) des Langlochs zwischen 80% und 95% des Abstandes (L₁) zwischen dem Innendurchmesser (56a) des Zwischenbereichs (52) und dem Außendurchmesser (54a) des Zwischenbereichs (52) beträgt.

2. Kupplungsmembran nach Anspruch 1,
**dadurch gekennzeichnet, dass**
das Verhältnis zwischen radialer Erstreckung (L₅) des Langlochs (60) und Erstreckung (L₆) des Langlochs (60) in Tangentialrichtung zwischen 1,05 und 2 beträgt, vorzugsweise zwischen 1,05 und 1,5, insbesondere zwischen 1,1 und 1,2.

3. Kupplungsmembran nach Anspruch 1 oder 2,
**dadurch gekennzeichnet, dass**
insbesondere acht Langlöcher (60) vorgesehen sind.

4. Kupplungsmembran nach einem der vorstehenden Ansprüche,
**dadurch gekennzeichnet, dass**
die Summe der durch die Langlöcher (60) gebildeten Freiflächen zwischen 28% und 40% der Fläche des Zwischenbereichs (52) beträgt.

5. Kupplungsmembran nach einem der vorstehenden Ansprüche, **dadurch gekennzeichnet, dass**
der Mittelpunkt (62) des Langlochs (60) außenseitig eines Mitteldurchmessers (58) des Zwischenbereichs (52) angeordnet ist, wobei der Mitteldurchmesser (52) in der Mitte zwischen dem Auβendurchmesser (54a) des Zwischenbereichs (52) und dem Innendurchmesser (56a) des Zwischenbereichs (52) angeordnet ist.

6. Kupplungsmembran nach Anspruch 5,
**dadurch gekennzeichnet, dass**
der Mittelpunkt (62) des Langlochs (60) in einem Abstandsintervall zwischen 50% und 60%, insbesondere in einem Abstandsintervall zwischen 52% und 58%, des radialen Abstandes (L₁) zwischen dem Innendurchmesser (56a) und dem Außendurchmesser (54a) der Zwischenbereichs angeordnet ist.

7. Kupplungsmembran nach einem der vorstehenden Ansprüche,
**dadurch gekennzeichnet, dass**
die radiale Erstreckung (L₅) des Langlochs zwischen 83% und 90% des Abstandes (L₁) zwischen dem Innendurchmesser (56a) des Zwischenbereichs (52) und dem Außendurchmesser (54a) des Zwischenbereichs (52) beträgt.

8. Kupplung mit
- einem ersten und einer zweiten Anschlussbauteil (10, 20, 25, 26, 28, 30) und
- einer Kupplungsmembran (50), deren innerer Anschlussbereich (56) mit dem ersten Anschlussbauteil (10) drehfest verbunden ist und deren äußerer Anschlussbereich (54) mit dem zweiten Anschlussbauteil (20, 25, 26, 28, 30) drehfest verbunden ist,
**dadurch gekennzeichnet, dass**
die Kupplungsmembran (50) nach einem der Ansprüche 1 bis 7 ausgebildet ist.

9. Kupplung nach Anspruch 8,
**dadurch gekennzeichnet, dass**
eines der Anschlussbauteile (20, 25, 26, 28, 30), vorzugsweise das zweite Anschlussbauteil (20, 25, 26, 28, 30), einen ringförmigen Abschnitt (26) aus einem Elastomer aufweist oder an einem solchen ringförmigen Abschnitt befestigt ist.

## Claims

1. A metallic coupling membrane (50) having a disk-shaped and in the unloaded condition planar base form comprising
- an annular inner connection zone (56) for torque-proof fixing to a first connector component (10), and
- an annular outer connection zone (54) for torque-proof fixing to a second connector component (20, 25, 26, 28, 30),
**characterized in that**
in an annular intermediate zone (52) between the inner and the outer connection zones (56, 54) at least six perforations (60) in the form of radially extending long holes (60) are provided, wherein
- the perforations (60) are disposed completely in the intermediate zone (52),
- the sum of the clearance areas formed by the long holes (60) is between 25 % and 50 % of the area of the intermediate zone (52), and
- the radial extension (L₅) of the long hole is between 80 % and 95 % of the distance (L₁) between the inner diameter (56a) of the intermediate zone (52) and the outer diameter (54a) of the intermediate zone (52).

2. The coupling membrane according to claim 1, **characterized in that**
the ratio of radial extension (L₅) of the long hole (60) to extension (L₆) of the long hole (60) in the tangential direction is between 1.05 and 2, preferably between 1.05 and 1.5, in particular between 1.1 and 1.2.

3. The coupling membrane according to claim 1 or 2, **characterized in that** in particular eight long holes (60) are provided.

4. The coupling membrane according to any one of the preceding claims, **characterized in that**
the sum of the clearance areas formed by the long holes (60) is between 28 % and 40 % of the area of the intermediate zone (52).

5. The coupling membrane according to any one of the preceding claims, **characterized in that**
the center (62) of the long hole (60) is disposed exterior to a central diameter (58) of the intermediate zone (52), wherein the central diameter (52) is disposed centrally between the outer diameter (54a) of the intermediate zone (52) and the inner diameter (56a) of the intermediate zone (52).

6. The coupling membrane according to claim 5, **characterized in that**
the center (62) of the long hole (60) is disposed in a distance interval between 50 % and 60 %, in particular in a distance interval between 52 % and 58 %, of the radial distance (L₁) between the inner diameter (56a) and the outer diameter (54a) of the intermediate zone.

7. The coupling membrane according to any one of the preceding claims, **characterized in that**
the radial extension (L₅) of the long hole is between 83 % and 90 % of the distance (L₁) between the inner diameter (56a) of the intermediate zone (52) and the outer diameter (54a) of the intermediate zone (52).

8. A coupling comprising
- a first and a second connector component (10, 20, 25, 26, 28, 30), and
- a coupling membrane (50) with the inner connection zone (56) connected to the first connector component (10) in a torque-proof manner and with the outer connection zone (54) connected to the second connector component (20, 25, 26, 28, 30) in a torque-proof manner,
**characterized in that**
the coupling membrane (50) is configured according to any one of the claims 1 to 7.

9. The coupling according to claim 8, **characterized in that**
one of the connector components (20, 25, 26, 28, 30), preferably the second connector component (20, 25, 26, 28, 30), has an annular section (26) made of an elastomer or is fixed to such an annular section.

## Revendications

1. Membrane métallique d'accouplement (50) présentant une forme de base en forme de disque et plane à l'état non chargé, comprenant
- une région de raccordement intérieure annulaire (56) pour la fixation de manière solidaire en rotation à un premier composant de raccordement (10) et
- une région de raccordement extérieure annulaire (54) pour la fixation de manière solidaire en rotation à un deuxième composant de raccordement (20, 25, 26, 28, 30),
**caractérisée en ce**
**qu'**au moins six orifices (60) sous forme de trous oblongs s'étendant radialement (60) sont prévus dans une région intermédiaire annulaire (52) entre les régions de raccordement intérieure et extérieure (56, 54),
- les orifices (60) étant disposés entièrement dans la région intermédiaire (52),
- la somme des surfaces libres formées par les trous oblongs (60) valant entre 25% et 50% de la surface de la région intermédiaire (52) et
- l'étendue radiale (L₅) du trou oblong valant entre 80% et 95% de la distance (L₁) entre le diamètre intérieur (56a) de la région intermédiaire (52) et le diamètre extérieur (54a) de la région intermédiaire (52).

2. Membrane d'accouplement selon la revendication 1,
**caractérisée en ce que**
le rapport entre l'étendue radiale (L₅) du trou oblong (60) et l'étendue (L₆) du trou oblong (60) dans la direction tangentielle vaut entre 1,05 et 2, de préférence entre 1,05 et 1,5, en particulier entre 1,1 et 1,2.

3. Membrane d'accouplement selon la revendication 1 ou 2,
**caractérisée en ce**
**qu'**en particulier huit trous oblongs (60) sont prévus.

4. Membrane d'accouplement selon l'une quelconque des revendications précédentes,
**caractérisée en ce que**
la somme des surfaces libres formées par les trous oblongs (60) vaut entre 28% et 40% de la surface de la région intermédiaire (52).

5. Membrane d'accouplement selon l'une quelconque des revendications précédentes,
**caractérisée en ce que**
le centre (62) du trou oblong (60) est disposé à l'extérieur d'un diamètre moyen (58) de la région intermédiaire (52), le diamètre moyen (52) étant situé à mi-chemin entre le diamètre extérieur (54a) de la région intermédiaire (52) et le diamètre intérieur (56a) de la région intermédiaire (52).

6. Membrane d'accouplement selon la revendication 5,
**caractérisée en ce que**
le centre (62) du trou oblong (60) est situé à un intervalle de distance entre 50% et 60%, en particulier à un intervalle de distance entre 52% et 58%, de la distance radiale (L₁) entre le diamètre intérieur (56a) et le diamètre extérieur (54a) de la région intermédiaire.

7. Membrane d'accouplement selon l'une quelconque des revendications précédentes,
**caractérisée en ce que**
l'étendue radiale (L₅) du trou oblong vaut entre 83% et 90% de la distance (L₁) entre le diamètre intérieur (56a) de la région intermédiaire (52) et le diamètre extérieur (54a) de la région intermédiaire (52).

8. Accouplement comprenant
- un premier et un deuxième composant de raccordement (10, 20, 25, 26, 28, 30) et
- une membrane d'accouplement (50) dont la région de raccordement intérieure (56) est reliée de manière solidaire en rotation au premier composant de raccordement (10) et dont la région de raccordement extérieure (54) est reliée de manière solidaire en rotation au deuxième composant de raccordement (20, 25, 26, 28, 30),
**caractérisé en ce que**
la membrane d'accouplement (50) est réalisée selon l'une quelconque des revendications 1 à 7.

9. Accouplement selon la revendication 8,
**caractérisé en ce que**
l'un des composants de raccordement (20, 25, 26, 28, 30), de préférence le deuxième composant de raccordement (20, 25, 26, 28, 30), comprend une portion annulaire (26) en un élastomère ou est fixé à une telle portion annulaire.
